# EUROPEAN PATENT APPLICATION

(11) **EP 1 909 239 A1**
(43) Date of publication of application: **09.04.2008**
(21) Application number: 07117638.2
(22) Date of filing: 01.10.2007
(51) Int. Cl.: G07F 7/10, G07F 17/42

(54) **Modular system for smart card issuing**

(30) Priority: 02.10.2006 IT RM20060519
(71) Applicant: Eta Systemi CKB S.r.l., 00146 Roma (IT)
(72) Inventor: Conti, Romano, 00151, Roma (IT)
(74) Representative: Papa, Elisabetta

(57) **Abstract**

The present invention relates to a modular system for personal smart cards, that is including information identifying a user, such as for example the Electronic Identity Card, comprising means for acquiring and storing the personal and biometrical data of the requesting user into the smart card.

## Description

The present invention relates to a modular system for issuing personal smart cards, that is containing information identifying a user, such as for example the Electronic Identity Card.

In the known art there are some systems for issuing smart cards of this type, however all known systems have one or more limitations. For example, none of these systems allows different modes for acquiring the information to be stored onto the smart card. Furthermore, an additional limitation of the known systems lies in the identification and authorization of the operator who has to run the system and then issue the smart card. Such identification is clearly essential for ruling reasons, as such smart cards can be recognition documents and/or contain sensitive data related to the users.

The object of the present invention is to obviate to the drawbacks mentioned above by referring to the known art, by providing a recognition and tracking method as defined in claim 1.

Secondary features of the present invention are defined, instead, in the corresponding depending claims.

The present invention, by overcoming the mentioned problems of known art, involves several and evident advantages which together with the features and application modes of the present invention will result clear from the following detailed description of an embodiment thereof, shown by way of example and not for limitative purpose. The figures of the enclosed drawings will be referred to, wherein:

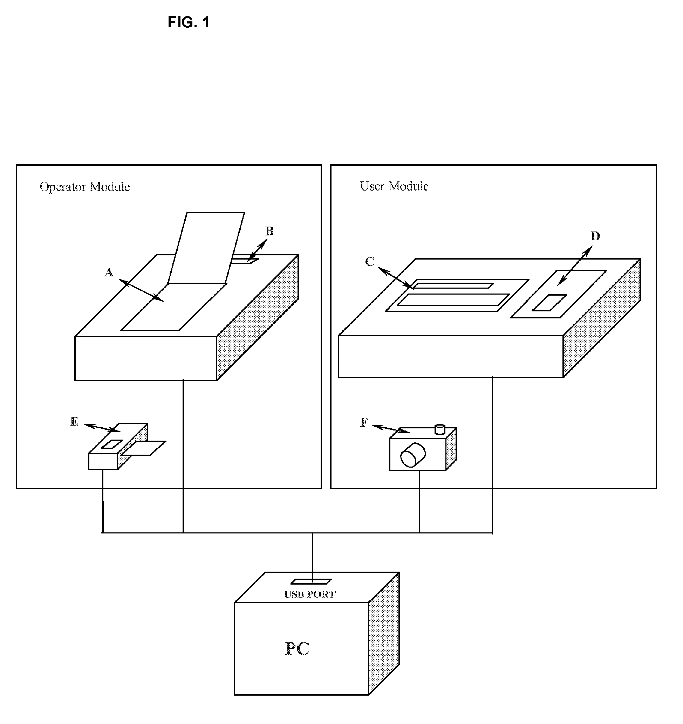

figure 1 is a structural chart of a system according to the present invention.

The present invention will be described hereinafter by referring to the above-mentioned figure.

The system according to the present invention substantially implements a position for issuing smart cards wherein data identifying a user are stored, such as for example the Electronic Identity Card.

Hereinafter in the description the case of the Electronic Identity Card will be continued to be referred to, but it is understood that there could be other applications, still remaining within the scope of the same inventive concept.

The system according to the present invention is a modular system comprising means for acquiring and storing personal and biometrical data of the requesting user in the Electronic Identity Card (EIC).

The system allows to acquire the personal data, the photograph of a user, his/her digitalized signature, the finger-print and to store all acquired data into a microprocessor smart card.

The system can be logically and physically divided into two independent modules.

A first module, which hereinafter will be designated as user module MU, has been devised to be used by the user requesting the issuing of the smart card, whereas a second module, which hereinafter will be designated as operator module MO, has been devised to be used by an operator. For practical purposes, it is possible positioning the two modules one spaced apart the other one so as to fit at best the structure of the use environment.

Both modules are then connected to a management central unit PC, which controls the operation thereof and coordinates the operability thereof. Such management central unit advantageously can be a Personal Computer.

More in detail, the user module advantageously can integrate a device for acquiring and digitalizing the user signature, for example a graphic tablet (C). The use of a graphic tablet allows the user to display the signature before the acquisition, for example onto a monitor and/or onto a LCD display thereon the use signs, by making the process easier, immediate and intuitive. The signature, once acquired, can be then stored in a standard format according to the user needs.

The user module further comprises first optical scanning means for acquiring a user digital finger-print, in particular a 1.2"-inch optical scanner (D). Such scanner meets the FBI IQS specifications Appendix F, the compliance thereof is requested to guarantee the systems' interoperability.

On the contrary, the operator module preferably comprises second optical scanning means for acquiring the printed images, for example a user photograph or other. Such means, for example, is constituted by a scanner A6 (A).

The scanner (A) can be used as alternative to the graphic tablet for acquiring the user signature. The operator in a dynamic and immediate way, by means of a suitable graphic interface, can choose which peripheral unit is to be used to acquire the user signature.

Furthermore, the operator module also comprises a reader/writer of standard PC/SC smart cards (B) for storing data in the smart card.

Optionally, in the operator module, photographic shooting means for acquiring a photograph (F) of the user can be provided. For example, such shooting means can be a high-resolution digital camera of the kind apt to be software-controlled. In this way it is possible, by means of a standard WIA (Windows Image Acquisition) interface to shoot, to activate the flash, to select the wished photograph, to erase the photographs, etc.

At last, the operator module comprises means for the biometrical authentication (E), in particular, an optical scanner for finger-prints, for example a CKB-1200 integrating inside a reader/writer of standard PC/SC smart cards.

This device will bind the use of the whole system to the recognition of an operator smart card and to the positive result of the check between the model of the finger-print stored in the smart card and the acquired one.

From an operative point of view, the system provides the acquisition of the user photograph, of his/her digitalized signature, of his/her finger-print and the storing of everything in a microprocessor smart card.

The present invention has been sofar described by referring to a preferred embodiment. It is to be meant that other embodiments belonging to the same inventive core may exist, all comprised within the protective scope of the here below reported claims.

## Claims

1. Modular system, which can be operated by an authorized operator, for issuing smart cards containing information identifying a user, comprising:
a first user module, for acquiring data identifying the user; and
a second operator module, for storing said data and issuing the smart card, said first and second module being connected to a management central unit (PC) apt to supervise the operativity thereof,
**characterized in that** said first user module comprises a device for acquiring and digitalizing the user signature and **in that** said second operator module comprises biometrical authentication means (E) for identifying a system operator.

2. System according to claim 1, wherein said device for acquiring and digitalizing the user signature is a graphic tablet (C).

3. System according to claim 1 or 2, wherein said user module further comprises first optical scanning means for acquiring a finger-print of the user.

4. System according to claim 3, wherein first optical scanning means comprises an optical scanner (D).

5. System according to claim 4, wherein said optical scanner (D) has a 1.2" inch size and it meets the FBI IQS specifications Appendix F.

6. System according to one of the preceding claims, wherein said operator module comprises second optical scanning means for acquiring printed images.

7. System according to claim 6, wherein said second optical scanning means comprises a scanner A6 (A).

8. System according to one of the preceding claims, wherein said second operator module further comprises a reader/writer of smart cards (B) for storing data in the smart card.

9. System according to one of the preceding claims, wherein said operator module further comprises photographic shooting means for acquiring a photograph (F) of the user.

10. System according to claim 9, wherein said shooting means is a high-resolution digital camera of the type apt to be software-controlled.

11. System according to one of the preceding claims, wherein said operator module further comprises biometrical authentication means (E).

12. System according to claim 11, wherein said biometrical authentication means comprises an optical scanner for digital finger-prints, integrating inside a reader/writer of standard PC/SC smart cards.
